# EUROPEAN PATENT APPLICATION

(11) **EP 4 588 351 A1**
(43) Date of publication of application: **23.07.2025**
(21) Application number: 24152758.9
(22) Date of filing: 19.01.2024
(51) Int. Cl.: A21B 5/02, A21C 5/00, A21B 3/18

(54) **AUTOMATIC FOOD WAFFLE MAKING MACHINE**

(71) Applicant: Comaco Alimentare S.r.l. Costruzioni Macchine Per Cialde e Coni Gelato, 50013 Campi Bisenzio (FI) (IT)
(72) Inventor: CONTI, PAOLO, 50019 SESTO FIORENTINO - FIRENZE (IT); PRIVITERA, MANUELA, 50018 SCANDICCI - FIRENZE (IT); BOSCHI, DORIANO, 53035 MONTERIGGIONI - SIENA (IT); GRASSINI, ANDREA, 52025 MONTEVARCHI - AREZZO (IT)
(74) Representative: Sarpi, Maurizio

(57) **Abstract**

Automatic machine for producing moulded food wafers, comprising a feed (1) of a mouldable food dough (2); a dosing and loading unit (3) for separating a plurality of doses (4) from the fed dough (2) and loading the doses (4) into a moulding and cooking unit (5) of the doses (4) of dough into wafers (15) of a desired shape; a moulding and cooking unit (5) of the doses (4) comprising: a plurality of heated moulds (6) each provided with a pair of mutually openable and closable die/punch sections (7, 8), opening and closing means (12) of said moulds, configured to open the moulds immediately upstream of an unloading station of the formed wafers (P2), keep them open up to a loading station (P1) of the doses (4), close them and keep them closed along a cooking path (9) downstream of the loading station (P1) and an unloading unit (14) of the wafers (15) arranged at said unloading station (P2), wherein the advancement path (9) has an elliptical trend, said loading (P1) and unloading (P2) stations being arranged at a working area (A) along a same linear section (10) of the path (9).

## Description

### Technical sector of the invention

The invention relates to the field of automatic machines for producing food wafers, for example, of the moulded type in a flat, cone, cup or glass shape, etc. used to contain ice cream and the like.

### State of the art

At present, automatic machines are known which, starting from a food dough, obtain a cooked and shaped wafer with the desired final shape by moulding it between hot walls.

For example, an apparatus for producing wafers comprising a plurality of heated moulds each consisting of a die and a punch is known from GB1065581. The moulds are guided along a path so that during the journey the wafer dough is cooked, being operated in cooperation with curved guides which, by means of pins or rollers engaged with an openable section of the moulds, periodically open and close the moulds to receive the dough and then release the formed wafer once the cooking is finished.

In view of the state of the art summarised above, the applicant has found that the solutions known to date are not entirely satisfactory in relation to the production of formed wafers, both in terms of maximum productivity and flexibility obtainable with the existing machines.

### Object of the invention

The need is therefore felt for an automatic machine for producing food wafers, in particular moulded flat wafers, cones or baskets for ice cream, which allows high productivity, limited waste and flexibility in the number of wafers produced.

### Summary of the invention

To this end, the invention has been achieved by proposing a machine according to at least one of the appended claims, in which a flow of a mouldable food dough is first separated into doses and fed to a moulding and cooking unit provided with multi-impression moulds, in which the dough assumes the desired shape and is cooked by advancing the moulds along an elliptical path passing in succession through a dose loading station and an unloading station of the cooked wafers both arranged along the same linear section of the cooking path.

A first advantage is that the machine is able to ensure high productivity and a small footprint, especially in width.

The machine optimises the space occupied in relation to the number of moulds, particularly in relation to the circular vertical-axis machine.

A further advantage is the possibility of providing modular sections of the cooking unit.

According to a further innovative aspect, the separation of the dough into doses and the feeding of the doses to the cooking unit is performed by cutting the flow of dough with a fixed frequency corresponding to the pitch of a first transfer device from which the individual doses are then transferred, subsequently forming one or more batches of doses to be loaded on further multiple transfer devices until the filling of multi-dose loading trays intended to load the moulds.

Alternatively, the machine can be fed with dough in creamy form dispensed by means of nozzles.

An advantage of the solution found is the possibility of easily adapting the production based on the type of dough, cooking and shape of the product requested.

Given the elliptical shape, the machine has the possibility of increasing the number of moulds by increasing the size of a central connection module between two fixed end heads, thus increasing the production capacity.

The structure of the machine allows the number of moulds to be modified, even significantly, keeping the width fixed but increasing the length.

Since the machine has an elliptical shape, the width is such that it can be transported, easily and without being disassembled, by means of containers or other means even with a high number of moulds and therefore also of considerable length, but not width.

The machine is provided with special collection trays and boxes for excess fats which are liquefied and expelled from the moulds during cooking.

Given the presence of a straight section, the automatic loading and unloading of the manufactured product is particularly easy.

The machine can also be advantageously provided with an automatic system for closing and locking the moulds and unlocking and opening for unloading the product and loading the dough.

### List of drawings

These and other advantages will be better understood by any person skilled in the art from the following description and the accompanying drawings, given as a non-limiting example, in which:
- fig. 1 shows a plan view of the machine of the invention;
- fig. 2 shows an axonometric view of the machine of the invention;
- figs. 3, 3a, respectively show a detail of the dosing unit of the machine of fig. 1 in side and top views;
- fig. 4a, 4b show a detail of the transfer mechanism of the cooked wafers respectively during the picking step from the cooking and transfer unit;
- fig. 5 shows a view of the cooking unit from the side facing the dosing unit.
- fig. 5a shows an enlarged view of detail "a" of fig. 5;
- figs. 6, 6a schematically illustrate the operation of the dosing unit in side and plan views, respectively.

### Detailed description

With reference to the accompanying drawings, an automatic machine for producing wafers according to the invention is disclosed.

In the illustrated embodiment, the machine comprises a feed pump 1 of a mouldable food dough 2 which is processed in a kneading tank 55 and pumped therefrom through conduits 56 which introduce a constant linear flow of dough into a dosing and loading unit 3 for the production of doses 4 of dough from which the wafers will then be formed.

Downstream of the dosing unit 3 there is then a moulding and cooking unit 5 which provides for the cooking and moulding of the doses 4 of dough in the form of wafers 15 by means of a plurality of heated moulds 6. The moulds 6 are preferably each formed by a pair of plates 7, 8 the first with the function of a multi-impression die 45, the second, movable with respect to the first, with the function of a punch for forming the wafers. During the operation of the machine, the sections 7 and 8 can be mutually opened and closed along a closed cooking path 9, with a substantially elliptical trend, extended from a loading station P1 of doses into the moulds 6 and a station P2 for unloading the cooked and formed wafers.

In the disclosed example, the opening and closing movement of the moulds 6 is actuated by means of a kinematic mechanism 12 configured to open the moulds immediately upstream of the unloading station P2, keep them open up to the loading station P1 along a working area A, close them and keep them closed along the cooking path 9 downstream of the loading station P1.

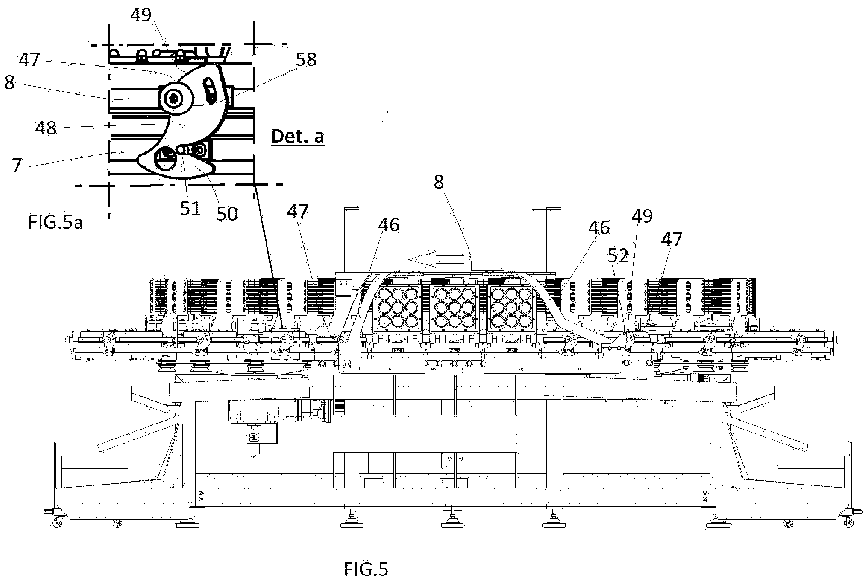

Preferably, as better seen in fig.5, 5a, the kinematic mechanism 12 comprises a cam 46 arranged at the working area A along a linear section 10 of the path 9 between an engagement point upstream of the unloading station P2 and a release point downstream of the loading station P1. Each movable plate 8 of the moulds 6 is provided with a shaped coupling and uncoupling plate 48 carrying an abutment element 47 which engages the cam 46 at the engagement point and releases it at the release point.

Figure 5a shows in detail the shape of a shaped coupling plate 48 integral with the opening and closing movement of the movable section 8 of the mould and with respect to which it can rotate around a rotation pin 58, to which the abutment 47 is also constrained.

In order to be able to perform the uncoupling movement of the sections of the mould 7, 8, the plate 48 is provided with a lead-in slot 50 which in the closed configuration of the mould retains a corresponding pin 51 of the fixed section 7, and is also provided with a sliding profile 49 with a corresponding fixed point 52, so that in the movement of the mould along the path 9, the fixed point 52 retains the profile 49 by oscillating the plate 48 around the pin 58, causing the uncoupling of the pin 51 from the slot 50.

In this configuration, in the continuation of the movement of the moulds, the upper plate is free from the lower plate and can open, being dragged by the abutment 47 which rises on the upward section of the cam 46. In the closing and coupling movement, the plate 8 then follows the downward section of the cam 46 at the end of which the shaped plate 48 is free to rotate by gravity around the rotation pin 58 and re-engage the coupling pin 51 until the next passage. The cooking step of the wafers therefore occurs in this configuration, with the sections 7 and 8 of the moulds clamped by the shaped plate 48.

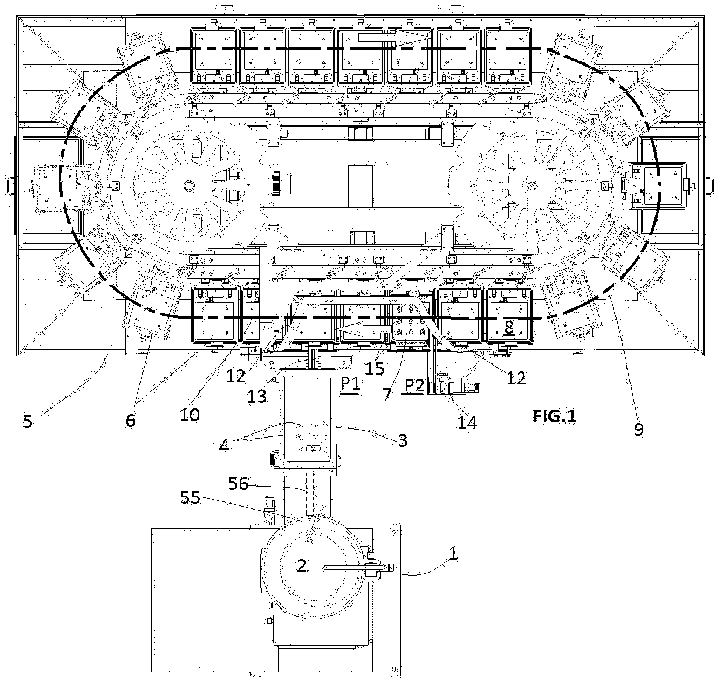

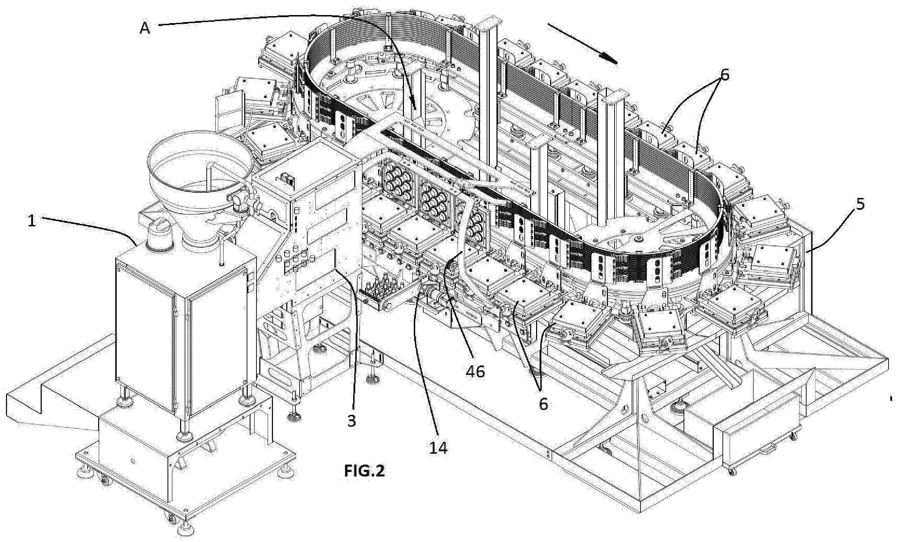

Still with reference to figures 1, 2, frontally to the cam 46 and along a linear section 10 of the path 9, a dosing and loading unit 3 of the doses is provided, arranged frontally at the loading station P1, and an unloading unit 14 of the formed wafers 15, arranged frontally at said unloading station P2.

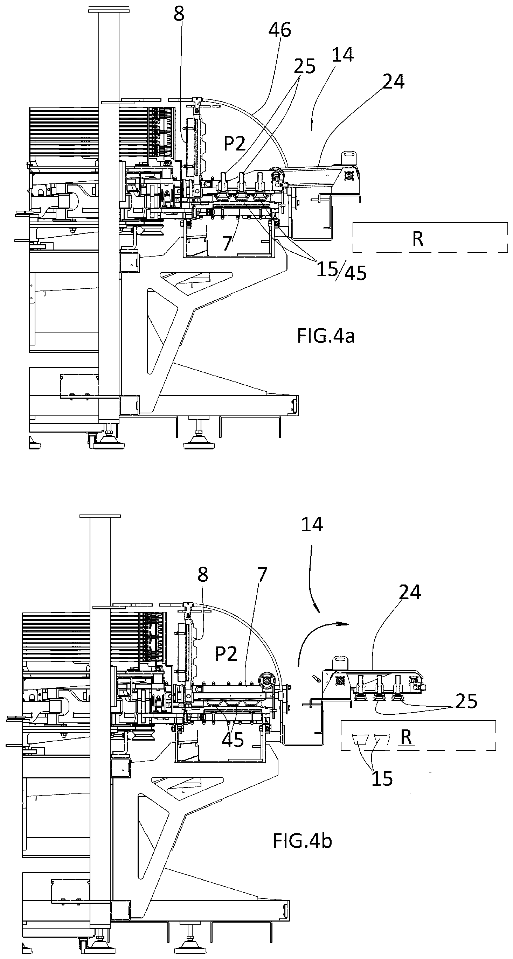

Preferably, as better illustrated in figures 4a, 4b, the unloading unit 14 comprises a transfer of the "pick and place" type comprising a rotating arm 24 provided with a number of aspirated gripping heads 25 corresponding to the impressions 45 of the die 7 of the mould 6 in the unloading station P2 occupied by the cooked wafers 15 and which can rotate between a gripping position (fig. 4a) in which the heads 25, connected to a vacuum source, aspirate and retain the wafers 15 and an unloading position (fig. 4b) in which the heads 25 interrupt the aspiration and release the wafers 15 in a collection area R. The gripping unit of the cooked wafers can be replaced as a function of the product to be made, for example it is possible to replace it with a roller for flat wafers or a mechanical extractor in the event of making cones or cups.

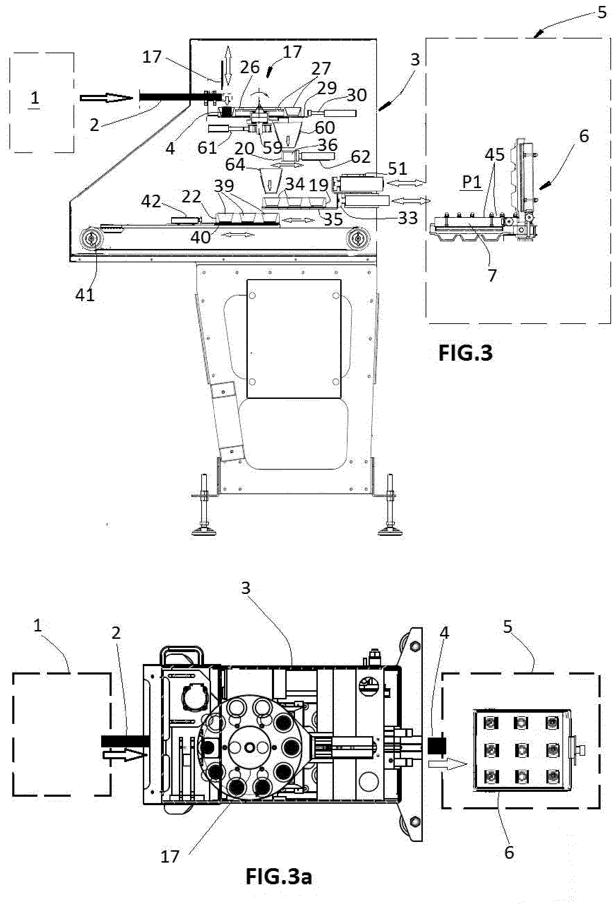

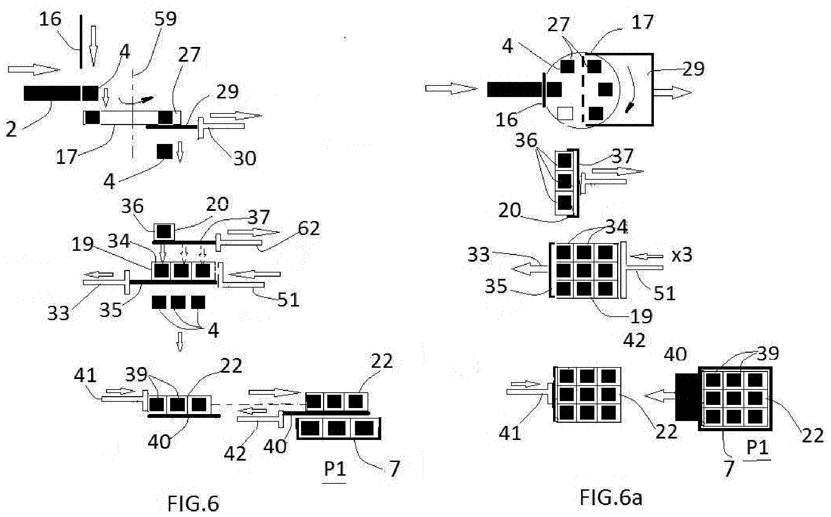

In greater detail and with reference to figures 3 and 6, the dosing unit 3 comprises a guillotine with a cutting edge 16 with alternating vertical motion which separates individual equal doses 4 from the dough 2 fed by the unit 1 with a fixed frequency.

The cut doses 4 fall into an underlying transfer device 17 comprising in the illustrated example a carousel 26 provided with peripheral seats 27 for housing the individual doses 4 and rotating by means of an actuator 61 rotating around an axis 59 with a frequency corresponding to that of the cutting of the doses.

A given number of seats 27, depending on the quantity of wafers which can be made with the individual mould 6 (in the example disclosed three seats), are provided with a movable bottom, preferably a common bottom, for example a hatch or sliding gate 29 operable by means of a bidirectional linear actuator 30 to let the respective doses fall through corresponding chutes 60 into an underlying multi-dose transfer device 20 with three boxes 36.

In the example disclosed, the linear actuator 30 of the hatch 29 is synchronised with the carousel 26 so as to release the batches of three doses occupying the three seats 27, i.e., every three passages of the carousel, but it is understood that different solutions can be provided to transfer a different number of doses simultaneously.

In this step it is also possible to envisage a weighing of the doses coming from the carousel 17 and any discarding of the non-compliant weight doses, for example by means of a deviation path of the dose to be discarded.

The three-box transfer device 20 is in turn controlled by a linear actuator 62 so that with each filling, while the carousel rotates with the bottom 29 closed to refill the seats 27, the actuator 62 controls the advancement of the transfer device 20 up to a chute 64 through which the three doses fall into an underlying tray 19 capable of containing a multiple of the doses coming from the transfer device 20.

In the example disclosed, the tray 19 has three rows of three seats or boxes 34 and is moved by a bidirectional linear actuator 51 at several positions below the chute 64 to repeatedly receive the batches of three doses until the complete filling, which in the example disclosed occurs in the most advanced position of the tray, on the left in figure 3.

The seats 34 of the tray 19 are in turn provided with a movable bottom 35, preferably a common bottom, which in the filling position is controlled by a bidirectional linear actuator 33 to simultaneously transfer by falling the three batches of three doses, i.e., a batch of nine doses, into a further multi-dose tray 22 provided with nine boxes or seats 39 and movable horizontally by means of a bidirectional actuator 41. In the case described, the actuator 41 is a belt actuator fixed to the tray 22 for mutually passing it from the filling position until at the loading station P1 of the cooking unit 5.

The seats 39 are also provided with a movable bottom, preferably a common movable bottom 40 openable by a bidirectional linear actuator 42, integral with the horizontal movement of the tray 22, which when the loading tray 22 is in the position P1 intervenes to open the bottom 40 and unload the doses into the impressions 45 of the plate 7 by falling. In this step, while the impressions 25 of the mould 6 exiting the working area A are loaded, the picking unit 14 picks up the cooked wafers from the mould entering the working area and which has concluded the cooking cycle.

Preferably, the working area A also provides sufficient space for the advancement of one or more empty and open moulds in order to allow cleaning and inspection.

Figure 6, 6a shows the operation of the machine with the subsequent multiplication of the doses transferred starting from the feeding of the individual doses separated by the cutting edge 16 up to the transfer of the nine doses from the loading tray 22 to the mould 6 which is in the loading position.

Advantageously, with this solution it is possible to adapt the production of the wafers both to the wafer which must be produced and to the type of processed dough in the feed 1 which, in general, requires certain processing times to be able to be moulded and cooked, minimising processing waste.

In fact, the nature of the dough, together with its processability, sets the maximum production speed of a continuous flow and this, in combination with the amount of dough required by the individual wafer, determines the cutting frequency of the cutting edge 16 and thus the pitch of the first transfer device 17 which receives the cut doses.

However, the type of dough and the amount of doses also determine the optimal duration of the cooking cycle and thus the advancement speed of the moulds along the path 9 between the loading position and the unloading position.

With the disclosed solution, as the production frequency of the doses 4 varies, it will thus be possible to modulate the number of doses accumulated in the transfer devices downstream, and thus in the number of wafers obtained simultaneously in the individual moulds.

Furthermore, the substantially elliptical shape of the path 9 allows the machine to be arranged for a modular structure with one or more central sections S1 to form the linear sections of the path and its overall extension, and side sections S2 to complete the cycle.

This possibility therefore allows to further modulate the duration of the cooking cycle and the production capacity of the machine, as well as offering a reduced footprint due to the concentration of the operating, dosing, loading and unloading units on one or both linear sides of the machine.

The present invention has been described according to preferred embodiments but equivalent variants can be conceived without departing from the scope of protection granted.

## Claims

1. Automatic machine for producing moulded food wafers, comprising
a feed (1) of a mouldable food dough (2),
a dosing and loading unit (3) for separating a plurality of doses (4) from the fed dough (2) and loading the doses (4) into a moulding and cooking unit (5) of the doses (4) of dough in wafers (15) of a desired shape, a moulding and cooking unit (5) of the doses (4) comprising
a plurality of heated moulds (6) each provided with a pair of mutually openable and closable die/punch sections (7, 8),
means (12) for opening and closing said moulds, configured to open the moulds immediately upstream of an unloading station of the formed wafers (P2), keep them open up to a loading station (P1) for the doses (4), close them and keep them closed along a cooking path (9) downstream of the loading station (P1),
a unit (14) for unloading the wafers (15) arranged at said unloading station (P2),
**characterised in that** said advancement path (9) has an elliptical trend, said loading (P1) and unloading (P2) stations being arranged at a working area (A) along a same linear section (10) of the path (9).

2. Machine according to claim 1, wherein said feeding unit (2) feeds a constant linear flow of dough to the dosing unit (3) and said dosing unit (3) comprises
a singularisation device (16) to separate a succession of individual equal doses of dough (4) from said linear flow at a fixed frequency
a first transfer device (17) which receives the individual doses from said singularisation device
at least a second multi-dose transfer device (20) which simultaneously receives a plurality of individual doses (4) from said first transfer device (17).

3. Machine according to claim 2, wherein:
said second multi-dose transfer device (20) is configured to simultaneously and repeatedly transfer said plurality of doses (4) to a multi-dose transfer tray (19) capable of accommodating a multiple of said plurality of doses (4), and wherein
said multi-dose transfer tray (19) is configured to simultaneously transfer said multiple plurality of doses (4) to a loading multi-dose tray (22), and wherein
said loading tray (22) is configured to simultaneously transfer said multiple plurality of doses (4) in said loading station (P1) of the cooking unit (5).

4. Machine according to claim 2, wherein said distributor (17) comprises a carousel (26) with a plurality of seats (27) for housing the doses (4) separated by the cutting edge (16) and a first movable bottom (29) operable by means of an actuator (30) for transferring said plurality of doses (4) in the second multi-dose transfer device (20) by falling.

5. Machine according to claim 3, wherein said second transfer device comprises a box (20) with multiple seats (36), arranged below the carousel (17) and repeatedly operable by means of an actuator (62) to transfer said plurality of doses (4) into the multi-dose transfer tray (19) by falling.

6. Machine according to claim 3, wherein said multi-dose transfer tray (19) comprises
an actuator (51) arranged to move the first tray (19) at several positions below the box (20) to repeatedly receive said plurality of doses (4).
seats (34) provided with a third movable common bottom (35) and an actuator (33) arranged to repeatedly operate said third movable bottom (35) and simultaneously transfer said multiple plurality of doses (4) to the multi-dose loading tray (22) by falling.

7. Machine according to claim 3, wherein said second multi-dose tray (22) comprises
seats (39) provided with a fourth movable common bottom (40),
an actuator (41) arranged to bring the loading tray (22) at said loading station (P1) of the cooking unit (5),
an actuator (42) for operating the fourth movable bottom (40) of the second tray (22) and transferring the doses (4) to corresponding seats (45) of the die (7) of the mould (6) in the loading station (P1).

8. Machine according to one of the preceding claims, wherein said unloading unit (14) comprises a pick and place arm device (24) provided with a number of aspirated gripping heads (25) corresponding to the impressions (45) of the die (7) of the mould (6).

9. Machine according to one of the preceding claims, wherein
said moulds (6) comprise a die section (7) slidable along the path (9) and a punch section (8) openable with respect to the die (7),
said means (12) for opening and closing the moulds (6) comprise
a cam (46) extended at said working area (A) along the linear section (10) of the path (9) between an engagement point upstream of the unloading station (P2) and a release point downstream of the loading station (P1),
abutment elements (47) associated with each mould (6) configured to engage the cam (46) at the engagement point and release it at the release point,
a shaped coupling plate (48) integral with the opening and closing motion of the movable section (8) of the mould and provided with a slot (50) for coupling a corresponding pin (51) of the fixed section (7), and also provided with a first engagement profile (49) with a corresponding fixed point (52) for determining the uncoupling of the pin (51) and allowing the opening of the mould.

10. Machine according to one of the preceding claims, wherein said dosing and loading unit comprises means for weighing said doses (4) and rejecting the doses of weight not conforming to a predetermined weight.

11. Method for the automatic production of moulded food wafers from a continuous flow of a mouldable food dough, comprising
a step of feeding said continuous dough,
a step of dosing a succession of separated doses from the fed dough,
a step of loading the doses into a unit for moulding and cooking the wafers,
a step of moulding and cooking the doses of dough in wafers of a desired shape,
a step of unloading the cooked wafers from the moulding and cooking unit,
comprising
**characterised in that** said dosing step comprises
a fixed-frequency singularisation of a succession of individual equal doses of dough separated by said linear flow,
a first transfer of the individual doses,
at least a second simultaneous transfer of a plurality of individual doses.

12. Method according to claim 11, comprising a simultaneous transfer of a multiplicity of said plurality of doses.

13. Method according to claim 12, wherein said loading step comprising a simultaneous transfer of said multiplicity of plurality of doses in said moulding and cooking unit.
